Europäisches Patentamt

European Patent Office

Office européen des brevets

(11) Veröffentlichungsnummer : **0 055 333**
**B1**

(12) # EUROPÄISCHE PATENTSCHRIFT

(45) Veröffentlichungstag der Patentschrift :
02.01.86

(21) Anmeldenummer : 81107911.0

(22) Anmeldetag : 05.10.81

(51) Int. Cl.⁴ : **G 01 F   7/00**, G 01 F   9/00,
G 01 F   1/38, G 01 L   7/04,
G 01 D   5/04

(54) **Einrichtung zur Anzeige des Kraftstoff-Streckenverbrauchs eines Kraftfahrzeugs.**

(30) Priorität : 27.12.80 DE 3049221

(43) Veröffentlichungstag der Anmeldung :
07.07.82 Patentblatt 82/27

(45) Bekanntmachung des Hinweises auf die Patenterteilung : 02.01.86 Patentblatt 86/01

(84) Benannte Vertragsstaaten :
DE FR GB SE

(56) Entgegenhaltungen :
EP-A- 0 032 534
DE-A- 2 952 268
GB-A-   764 857
US-A- 1 376 505
US-A- 1 444 099
US-A- 2 032 245

(73) Patentinhaber : **VDO Adolf Schindling AG**
**Gräfstrasse 103**
**D-6000 Frankfurt/Main (DE)**

(72) Erfinder : **Ruschek, Gerhard**
**Elsa-Brandström-Strasse 1**
**D-6234 Hattersheim (DE)**
Erfinder : **Stier, Bernhard**
**Schwarzwaldstrasse 17**
**D-6233 Kelkheim (DE)**

(74) Vertreter : **Könekamp, Herbert, Dipl.-Ing.**
**Sodener Strasse 9**
**D-6231 Schwalbach (DE)**

## Beschreibung

Die Erfindung bezieht sich auf eine Einrichtung zur Anzeige des Kraftstoff-Streckenverbrauchs eines Kraftfahrzeuges mit einem Ottomotor und einem Schaltgetriebe, mit einem Anzeigemanometer, dessen druckempfindliches Element zur Messung des Saugrohrdrucks an das Saugrohr des Motors angeschlossen ist und über ein Zeigerwerk mit einer Zeigerwelle in Verbindung steht, sowie mit einem elektromagnetischen Steuerelement in Form eines Tauchmagnetsystems, das eine Erregerspule sowie einen durch diese verstellbaren beweglichen Teil aufweist und das auf das Anzeigesystem dergestalt einwirkt, daß bei wenigstens zwei Gangstufen die gleiche Skalierung für den Kraftstoff-Streckenverbrauch gilt.

Bei einer derartigen zum Stand der Technik nach Art. 54(3) gehörenden, d. h. nicht vorveröffentlichten Anzeigeeinrichtung (EP-A-0 032 534), ist die üblicherweise zwischen dem freien Röhrenfederende und dem Zahnsegment vorhandene Verbindungsstange verschieblich mit dem Zahnsegment verbunden. Durch Verschwenken der Verbindungsstange um ihr an der Röhrenfeder angelenktes Ende kann das Übersetzungsverhältnis zwischen der Röhrenfeder und dem Zeigerwerk verändert werden. Die Verschwenkung erfolgt hierbei mittels eines elektromagnetischen Steuerelements, das mit seinem beweglichen Teil an einem Punkt der Verbindungsstange angreift. Durch Beaufschlagung des Steuerelements mit unterschiedlich starken Strömen kann dann für jede Gangstufe des Schaltgetriebes die richtige Übersetzung gewählt werden, so daß über den gesamten Drehzahl- und Schaltbereich der jeweilige Kraftstoff-Streckenverbrauch anzeigbar ist. Durch die lose Verbindung der Verbindungsstange mit dem Zahnsegment ergibt sich jedoch eine unerwünschte Beeinflussung der Anzeigenkennlinie des Meßinstruments, so daß die Genauigkeit der Anzeige in den einzelnen Schaltbereichen zu wünschen übrig läßt. Darüber hinaus ist eine solche Einrichtung aufgrund der Dreh- und Schubbewegung der Verbindungsstange, an der das Steuerelement angreift, nur verhältnismäßig bauteilaufwendig zu realisieren.

Es ist desweiteren eine Einrichtung der eingangs genannten Art bekannt (GB-A-764 857), bei der zwischen dem Saugrohr und dem Anzeigeinstrument zur Messung des Unterdrucks ein elektromagnetisches Doppelventil angeschlossen ist, das in Abhängigkeit vom jeweils eingelegten Gang dergestalt angesteuert ist, daß die Verbindungsleitung zwischen dem Saugrohr und dem Anzeigeinstrument über eines der unterschiedlichen Durchlaßquerschnitt aufweisenden Doppelventile mit der Außenluft in Verbindung steht. Auf diese Weise kann in den einzelnen Gangbereichen der Kraftstoff-Streckenverbrauch mit einem einzigen Anzeigeinstrument angezeigt werden.

Es sind desweiteren Druckmeßinstrumente mit Röhrenfedern bekannt (US-A-1 376 505 ; US-A-1 444 099), bei denen das Röhrenfederende mit der Zeigerwelle über ein Zugmittelgetriebe verbunden ist. Das Seil des Zugmittelgetriebes ist einerseits über eine Feder fest mit dem Gehäuse verbunden und andererseits mit einem drehbar gelagerten Hebel, der manuell oder mittels einer Druckmeßdose, die den Luftdruck mißt, verschwenkt werden kann. Auf diese Weise lassen sich Luftdruckschwankungen bei der Druckmessung kompensieren. Bei Anwendung dieses Prinzips bei Anzeigeeinrichtungen für den Streckenverbrauch ergeben sich aufgrund der Kopplung des Seils mit der Zeigerwelle Nullpunktänderungen, die zu einer Verfälschung des Meßergebnisses führen würden. Insofern läßt sich dieses Prinzip nicht für die gattungsgemäße Einrichtung verwenden.

Aufgabe der Erfindung ist es, eine Einrichtung zur Anzeige des Kraftstoff-Streckenverbrauchs eines Kraftfahrzeugs der eingangs beschriebenen Gattung so zu verbessern, daß sie mit einem möglichst geringen Aufwand an Mitteln realisierbar ist und zudem in jedem gewünschten Gangbereich den Kraftstoff-Streckenverbrauch möglichst genau und irrtumsfrei ablesbar anzeigt.

Diese Aufgabe wird erfindungsgemäß dadurch gelöst, daß das druckempfindliche Element eine Röhrenfeder ist, daß ein am freien Röhrenfederende angreifendes Federelement vorhanden ist, dessen Vorspannung mit dem Tauchmagnetsystem auf mindestens einen vorgegebenen Wert einstellbar ist, einstellbar ist, daß als Steuerelement ein Tauchmagnetsystem vorgesehen ist, dessen Erregerspule in einem Stromkreis mit mindestens einem mit dem Gangwählhebel des Schaltgetriebes in Wirkverbindung stehenden Tastschalter angeordnet ist, und daß der bewegliche Teil des Tauchmagnetsystems mit einer Federkraft belastet ist, dergestalt, daß durch diese das Federelement bei entregtem Tauchmagnetsystem in eine vorspannungslose Ruhestellung gebracht ist.

Bei der erfindungsgemäßen Einrichtung ist die Übersetzung zwischen der Röhrenfeder und dem Zeigerwerk konstant, so daß die Verwendung eines Federelements mit einer linearen Federkennlinie vorausgesetzt, die Kennlinie der Anzeigeeinrichtung in jeder Gangstufe gleich ist und sich mithin nicht mehr, wie bei der eingangs beschriebenen Einrichtung, ändert. Die erfindungsgemäße Einrichtung erlaubt die Verwendung handelsüblicher Anzeigemanometer, die lediglich noch durch das Stellelement und das Federelement ergänzt werden müssen. Bei der eingangs beschriebenen Einrichtung nach dem Stand der Technik ist die Verwendung eines handelsüblichen Anzeigemanometers dagegen nicht möglich, da dort ein besonders ausgebildetes Zahnsegment für das Anzeigemanometer benötigt wird. Auf teure Ventile kann gänzlich verzichtet werden. Die erfindungsgemäße Einrichtung kann also wesentlich einfacher und mit weniger zusätzlichem Bauteileaufwand realisiert werden, als dies bei den oben beschriebenen Einrichtungen der Fall ist, da in die Kinematik des Meßwerks selbst nicht eingegriffen wird.

Als Federelement ist am zweckmäßigsten eine Zugfeder vorgesehen. An und für sich ist auch die Verwendung einer Druckfeder möglich, jedoch ist dies mit einem höheren Bauteilaufwand verbunden, da dann zusätzliche Maßnahmen zur Führung und Stützung der Feder erforderlich sind.

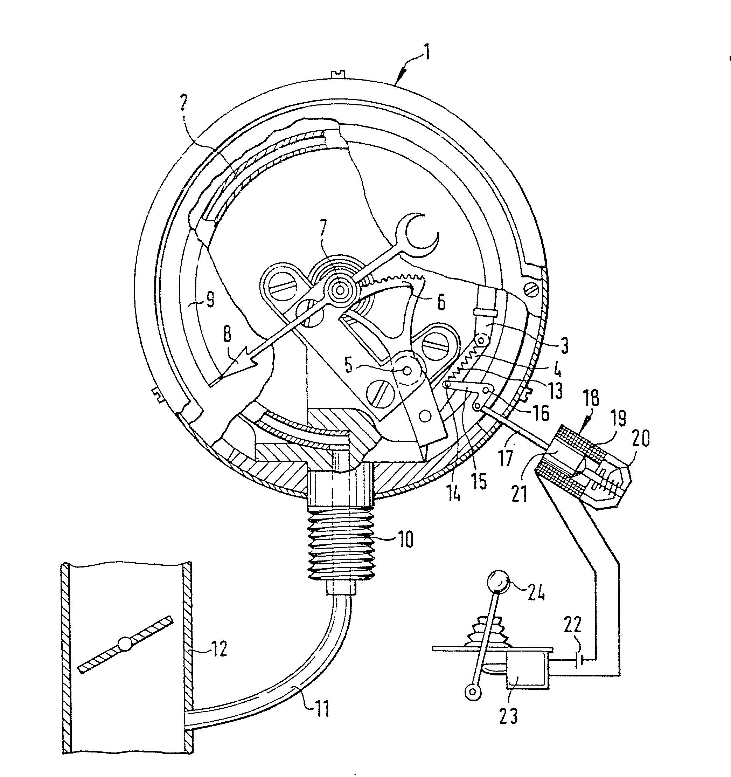

Die Erfindung sei anhand der Zeichnung, die in zum Teil schematischer Darstellung ein Ausführungsbeispiel enthält, näher erläutert.

Die Anzeigeeinrichtung, die in einer teilgeschnittenen Ansicht dargestellt ist, weist ein Anzeigemanometer 1 auf, das als Röhrenfedermanometer ausgebildet ist. Es enthält eine Röhrenfeder 2, deren bewegliches Ende 3 über eine Verbindungsstange 4 mit einem um eine Drehachse 5 drehbaren Zahnsegment 6 in Verbindung steht. Das Zahnsegment greift in bekannter Weise in ein Ritzel auf der Zeigerwelle 7 ein, auf der ein Zeiger 8 sitzt. Der Zeiger 8 spielt über einer Skala 9. Der Stutzen 10 des Manometers 1 steht über eine Leitung 11 mit dem Saugrohr 12 in Verbindung, so daß die Röhrenfeder 2 in Abhängigkeit von dem im Saugrohr 12 herrschenden Druck bewegt wird. Am freien Ende 3 der Röhrenfeder 2 greift des weiteren eine Zugfeder 13 an, deren anderes Ende in ein Loch 14 eines Hebels 15 eingehängt ist, der um die Achse 16 schwenkbar gelagert ist. Am anderen Ende des Hebels 15 ist eine Stange 17 eines Tauchmagnetsystems 18 angelenkt, das eine Erregerspule 19 aufweist. Eine Feder 20 versucht den Tauchkern 21 aus der Erregerspule 19 herauszudrücken, während die Erregerspule 19 die Tendenz hat, den Tauchkern 21 hereinzuziehen, wenn sie erregt ist.

Die Erregerspule 19 ist in einem Stromkreis mit der Fahrzeugbatterie 22 und einem Tastschalter 23 angeordnet. Der bewegliche Teil des Tastschalters 23 steht mit dem Gangwählhebel 24 in Wirkverbindung, derart, daß ein Kontakt im Tastschalter 23 geschlossen wird, wenn der direkte 4.Gang eingelegt ist.

In diesem Fall wird die Erregerspule 19 bestromt, der Tauchkörper 21 mit der Stange 17 in die Erregerspule 19 hereingezogen, der der Feder 13 zugeordnete Arm des Hebels 15 entgegen dem Uhrzeigersinn verschwenkt und die Feder 13 gespannt. Durch die auf die Röhrenfeder 2 wirkende Kraft der vorgespannten Zugfeder 4 wird eine Dämpfung der Röhrenfeder 2 erreicht, derart, daß nun ein höherer Druck für den gleichen Winkelausschlag des Zeigers wie zuvor benötigt wird. Bei gleichem Druck im Saugrohr 12 ergibt sich mithin im direkten 4.Gang ein geringerer Zeigerausschlag und damit ein geringerer Kraftstoff-Streckenverbrauch als im 3.Gang oder einem der unteren Gänge.

Wird die Skalierung 9 der Anzeigeeinrichtung für den 3.Gang ausgelegt, so kann die vorliegende Ausführungsform zur Messung und Anzeige des Kraftstoff-Streckenverbrauchs sowohl für den 3. als auch für den direkten 4.Gang benutzt werden.

Werden weitere mit dem Gangwählhebel 24 in Wirkverbindung stehende Tastschalter vorgesehen, von denen jeder in einer bestimmten Stellung des Gangwählhebels betätigt wird und über die jeweils diesen Gangwählhebelstellungen entsprechende Ströme zu der Tauchspule 19 fließen, so kann die Einrichtung ohne weiteres zur korrekten Anzeige des Kraftstoff-Streckenverbrauchs in jeder Gangstufe verwendet werden. In jeder Gangstufe ist dann die Feder 4 um einen dieser Gangstufe entsprechenden Betrag gegenüber der Röhrenfeder 2 bezogen auf ihre Ruhestellung vorgespannt.

**Patentansprüche**

1. Einrichtung zur Anzeige des Kraftstoff-Streckenverbrauchs eines Kraftfahrzeuges mit einem Ottomotor und einem Schaltgetriebe, mit einem Anzeigemanometer (1), dessen druckempfindliches Element (2) zur Messung des Saugrohrdrucks an das Saugrohr (12) des Ottomotors angeschlossen ist und über ein Zeigerwerk (4-6) mit einer Zeigerwelle (7) in Verbindung steht, sowie mit einem elektromagnetischen Steuerelement in Form eines Tauchmagnetsystems (18), das eine Erregerspule (19) sowie einen durch diese verstellbaren beweglichen Teil (21) aufweist und das auf das Anzeigemanometer dergestalt einwirkt, daß bei wenigstens zwei Gangstufen die gleiche Skalierung für den Kraftstoff-Streckenverbrauch gilt, dadurch gekennzeichnet, daß das druckempfindliche Element eine Röhrenfeder (2) ist, daß ein allein am freien Röhrenfederende (3) angreifendes Federelement (13) vorhanden ist, dessen Vorspannung mit dem Tauchmagnetsystem (18) auf mindestens einen vorgegebenen Wert einstellbar ist, daß die Erregerspule (19) des Tauchmagnetsystems (18) in einem Stromkreis mit mindestens einem mit dem Gangwählhebel (24) des Schaltgetriebes in Wirkverbindung stehenden Tastschalter (23) angeordnet ist, und daß der bewegliche Teil (21) des Tauchmagnetsystems (18) mit einer Federkraft (20) belastet ist, dergestalt, daß durch diese das Federelement (13) bei entregtem Tauchmagnetsystem in eine vorspannungslose Ruhestellung gebracht ist.

2. Einrichtung nach Anspruch 1, dadurch gekennzeichnet, daß als Federelement eine Zugfeder (13) vorgesehen ist.

**Claims**

1. Device for indicating the fuel/distance consumption of a motor vehicle with an Otto-cycle or petrol engine and with a change-speed gear, with an indicating pressure gauge (1) whose pressure-sensitive element (2) is connected to the induction pipe (12) of the petrol engine for measuring the induction pipe pressure and is connected via a pointer mechanism (4-6) to a pointer shaft (7), also with an electromagnetic control element in the form of a solenoid system (18) comprising and excitation coil (19) and also a movable part (21) displaceable thereby, and which acts in such a manner on the indicating pressure gauge that the same scale arrangement is valid for fuel-distance consumption in at least two gear stages, characterised in that the pressure-sensitive element is a Bourdon spring (tube spring) (2), that there is provided a spring element (13) acting solely on the free Bourdon spring end (3) and with its preloading adjustable to at least one predetermined value with the solenoid system (18), that the excitation coil (19) of the solenoid system (18) is arranged in a circuit with at least one momentary-contact switch (23) operatively connected with the gear selector lever (24) of the change-speed gear, and that the movable part (21) of the solenoid system (18) is loaded with a spring force (20) in such a manner that the latter brings the spring element (13) into a position of rest without preload when the solenoid system is not energised.

2. Device according to claim 1, characterised in that a tension spring (13) is provided as the spring element.

**Revendications**

1. Dispositif d'affichage de la consommation de carburant, en fonction de la distance parcourue, d'un véhicule automobile muni d'un moteur à allumage par étincelle et d'un mécanisme de changement de vitesse, comportant un manomètre d'affichage (1) dont l'élément (2) sensible à la pression est raccordé à la tubulure d'aspiration (12) dudit moteur à étincelle en vue de mesurer la pression qui règne dans cette tubulure d'aspiration et est relié à un axe (7) porte-aiguille par l'intermédiaire d'un mécanisme (4-6) agissant sur l'aiguille, ainsi qu'un élément de commande électromagnétique qui, réalisé sous la forme d'un système (18) d'aimant à noyau plongeur comprenant un enroulement excitateur (19) ainsi qu'une partie mobile (21) pouvant être ajustée par ce dernier, agit sur le manomètre d'affichage d'une manière telle que la même graduation de la consommation de carburant en fonction de la distance parcourue soit valable pour au moins deux rapports enclenchés, dispositif caractérisé par le fait que l'élément sensible à la pression consiste en un tube élastique (2) ; par le fait qu'il est prévu un élément élastique (13) qui est seul en prise avec l'extrémité libre (3) du tube élastique et dont la précharge peut être ajustée à au moins une valeur prédéterminée au moyen dudit système (18) d'aimant à noyau plongeur, par le fait que l'enroulement excitateur (19) de ce système (18) d'aimant à noyau plongeur est branché dans un circuit électrique renfermant au moins un interrupteur (23) à pointeau en liaison efficace avec le levier sélecteur (24) du mécanisme de changement de vitesses ; et par le fait que la partie mobile (21) du système (18) d'aimant à noyau plongeur est chargée par la force d'un ressort (20), d'une manière telle que, lorsque le système d'aimant à noyau plongeur est désexcité, la force de ce ressort amène l'élément élastique (13) à une position de repos exempte de précharge.

2. Dispositif selon la revendication 1, caractérisé par le fait qu'il est prévu un ressort de traction (13) en tant qu'élément élastique.